# EUROPÄISCHE PATENTSCHRIFT

(11) **EP 0 808 687 B1**
(45) Veröffentlichungstag und Bekanntmachung des Hinweises auf die Patenterteilung: **18.10.2000**
(21) Anmeldenummer: 97105191.7
(22) Anmeldetag: 27.03.1997
(51) Int. Cl.: B23Q 1/00

(54) **Werkzeughalter mit Kühlmittelrohr**
Tool holder with coolant pipe
Porte-outil avec tuyau de réfrigération

(30) Priorität: 25.05.1996 DE 19621240
(43) Veröffentlichungstag der Anmeldung: 26.11.1997
(60) Teilanmeldung: 99105892.6
(73) Patentinhaber: CHIRON-WERKE GMBH & CO. KG, 78532 Tuttlingen (DE)
(72) Erfinder: Grund, Peter, Dr., 78647 Trossingen (DE); Haninger, Rudolf, 78606 Seitingen (DE)
(74) Vertreter: Otten, Hajo, Dr.-Ing.

(56) Entgegenhaltungen:
- DE-A- 4 117 765
- DE-A- 4 213 590
- US-A- 4 992 012

## Beschreibung

Die vorliegende Erfindung betrifft ein Kühlmittelrohr für einen Halter für ein Werkzeug, der einen eine obere Öffnung aufweisenden Kegel-Hohlschaft zum Einspannen in eine Werkzeugaufnahme umfaßt, wobei im Inneren des Kegel-Hohlschaftes das Kühlmittelrohr zur Zufuhr von Kühlmittel zu dem Werkzeug angeordnet wird, das Kühlmittelrohr eine der oberen Öffnung zugewandte Einlaßöffnung für Kühlmittel sowie einen oberen Rohrabschnitt mit einer zylindrischen, äußeren Mantelfläche aufweist, mit der bei in die Werkzeugaufnahme eingespanntem Halter ein Dichtring in Anlage ist, der in einem das Kühlmittelrohr dann zumindest teilweise übergreifenden Zufuhrrohr für Kühlmittel angeordnet ist.

Die Erfindung betrifft ferner einen Halter mit einem derartigen Kühlmittelrohr.

Ein derartiger Halter mit Kühlmittelrohr ist aus der DE 41 17 765 A1 bekannt. Diese Halter werden allgemein als HSK-Werkzeughalter bezeichnet; siehe z.B. DE 42 13 590 A1.

Diese Halter bestehen im wesentlichen aus drei Abschnitten, nämlich einmal dem Kegel-Hohlschaft, an den sich nach unten ein verdickter Bund anschließt, an dem bspw. Greifernuten für automatische Werkzeugwechselvorrichtungen vorgesehen sind. An diesen Bund schließt sich nach unten ein Halteschaft an, an dem unterschiedliche Werkzeuge befestigt werden können. Da einige dieser Werkzeuge im Betrieb durch Kühlmittel gekühlt werden müssen, ist in dem Inneren des Kegel-Hohlschaftes eine zentrische, abgestufte Gewindebohrung vorgesehen, in die ein Kühlmittelrohr eingeschraubt werden kann. Dieses Kühlmittelrohr weist einen zentralen Kühlmittelkanal auf, durch den von der Werkzeugmaschine kommendes Kühlmittel zu dem jeweiligen Werkzeug gelangt.

Derartige Halter oder HSK-Werkzeughalter sind genormt, sie können mit verschiedenen Werkzeugen bestückt und dann in eine Werkzeugaufnahme eingespannt werden, die in einer Spindel einer Werkzeugmaschine vorgesehen ist und eine zu dem Kegel-Hohlschaft komplementäre Öffnung aufweist.

Der Kegel-Hohlschaft ist mit einer oberen Öffnung versehen, durch die Zangensegmente und der Zugkegel eines Spannsystems in das Innere des Kegel-Hohlschaftes eingreifen können. Das Einspannen des Kegel-Hohlschaftes in die Aufnahme erfolgt derart, daß die Zangensegmente in ihrer Lösestellung zunächst nach innen geklappt sind und zusammen mit dem Zugkegel durch die Öffnung in den Kegel-Hohlschaft eingeschoben werden. Daraufhin wird der Zugkegel über seine Zugstange aus dem Kegel-Hohlschaft teilweise zurückgezogen, wobei er die Zangensegmente nach außen in ihre Spannstellung drückt, in der sie innen an dem Kegel-Hohlschaft anliegen und diesen drehfest mit der Spindel spannen.

Vor dem Einspannen muß jedoch in einem Einkuppelprozeß dafür gesorgt werden, daß sich das Werkzeug, also der Werkzeughalter in einer richtigen radialen Ausrichtung zu der Spindel befindet. Dieses Einkuppeln erfolgt, während sich die Spindel mit ihrer Kuppeldrehzahl dreht und eine Relativbewegung zu dem Werkzeughalter durchführt. Der Werkzeughalter ist während des Einkuppelns bereits in die Aufnahme eingeschoben, das Spannsystem wurde jedoch noch nicht betätigt. Zur Erzielung der radialen Zuordnung zwischen Halter und Spindel sind an der Spindel Nutensteine und an dem Halter bzw. dem Kegel-Hohlschaft entsprechende Vertiefungen vorgesehen, wobei die Nutensteine und die Vertiefungen so angeordnet und aneinander angepaßt sind, daß die Nutensteine nur in der vorgeschriebenen radialen Orientierung zwischen Spindel und Halter in die Vertiefungen eingreifen können. Sobald dieser Einkuppelvorgang abgeschlossen ist, dreht sich der Halter mit der Spindel mit und wird jetzt über das Spannsystem endgültig in die Werkzeugaufnahme eingezogen und verspannt.

Beim Einwechseln des Halters in die Werkzeugaufnahme gelangt das Kühlmittelrohr in eine in dem Zugkegel und in der Zugstange vorgesehene, zentrische Bohrung, durch die im Betrieb dann Kühlmittel zugeführt wird. Im vorderen Bereich dieser Bohrung ist ein Dichtring, vorzugsweise ein O-Ring vorgesehen, der in Anlage mit der zylindrischen äußeren Mantelfläche des Kühlmittelrohres gelangt. Während des oben beschriebenen Einkuppelvorganges erfolgt eine radiale Relativbewegung zwischen dem O-Ring und dem Kühlmittelrohr, wobei sich der O-Ring während des Spannvorganges axial gegenüber dem Kühlmittelrohr verschiebt. Mit anderen Worten, beim Einwechseln des Halters in die Werkzeugaufnahme wird der O-Ring zunächst relativ weit auf das Kühlmittelrohr aufgeschoben und dann nach dem Einkuppeln während des Spannvorganges wieder ein Stück zurückgezogen.

Bei Werkzeugmaschinen, die mit dem bekannten HSK-Werkzeughalter bestückt werden, gibt es im Betrieb immer wieder Probleme im Zusammenhang mit der Kühlmittelversorgung der Werkzeuge. Die Kühlmittelversorgung wird häufig durch verstopfte Kühlmittelkanäle in den Werkzeugen selbst unterbrochen oder aber dadurch nachteilig beeinflußt, daß die Abdichtung zwischen dem Kühlmittelrohr und der Kühlmittelzufuhr von seiten der Werkzeugmaschine undicht wird, so daß der Kühlmitteldruck abfällt und nicht mehr ausreicht, um das Kühlmittel in die kleinen Kühlmittelkanäle in den Werkzeugen hineinzudrücken. Eine Verringerung der Kühlmittelversorgung durch verstopfte Kühlmittelkanäle oder eine leckende Abdichtung führt jedoch häufig zu einer Überhitzung und damit zu einer Beschädigung des Werkzeuges, so daß eine häufige Reinigung des Halters, des Kühlmittelrohres sowie der Werkzeuge, mit denen die Halter bestückt sind, erforderlich ist. Darüber hinaus wird in relativ kurzen Abständen der Dichtring an der Werkzeugmaschine ausgewechselt. Unterbleiben diese zeit- und lohnintensiven Maßnahmen, so wird die Betriebssicherheit der mit den Haltern bestückten Werkzeugmaschinen verringert.

Vor diesem Hintergrund ist es Aufgabe der vorliegenden Erfindung, den eingangs erwähnten Halter sowie das Kühlmittelrohr derart weiterzubilden, daß bei konstruktiv einfachem Aufbau die Betriebssicherheit einer Werkzeugmaschine verbessert wird, die mit einem derartigen Halter mit Kühlmittelrohr bestückt ist.

Die der Erfindung zugrunde liegende Aufgabe wird bei dem eingangs genannten Halter sowie dem Kühlmittelrohr dadurch gelöst, daß sich von der Einlaßöffnung abgelegen an den oberen Rohrabschnitt nach unten ein weiterer Rohrabschnitt anschließt, dessen Außendurchmesser geringer ist als der des oberen Rohrabschnittes, wobei sich beim Einkuppeln des Halters der Dichtring im Bereich des weiteren Rohrabschnittes befindet und erst durch das Einspannen in dichtende Anlage mit der Mantelfläche des oberen Rohrabschnittes gelangt.

Auf diese Weise wird die der Erfindung zugrunde liegende Aufgabe vollkommen gelöst. Der Erfinder der vorliegenden Anmeldung hat nämlich erkannt, daß die Dichtprobleme auf Verschleiß des Dichtringes insbesondere wegen der radialen sowie axialen Relativbewegung zwischen dem Dichtring und der Mantelfläche des Kühlmittelrohres während des Einkuppel- und Einspannvorganges zurückzuführen ist. Die bekannten Kühlmittelrohre weisen nämlich einen in Längsrichtung durchgehend konstanten Außendurchmesser auf, haben also insgesamt eine zylindrische Mantelfläche, so daß während des Einkuppel- und Einspannvorganges der Dichtring an dieser Mantelfläche sowohl in radialer als auch in axialer Richtung reibt und dadurch vorzeitig verschlissen wird.

Weil jetzt der weitere Rohrabschnitt einen verringerten Außendurchmesser aufweist, ist der Dichtring während des Einkuppelvorganges, bevor also die Zugstange und der Zugkegel zum Spannen der Zangensegmente teilweise aus dem Kegel-Hohlschaft zurückgezogen werden, nicht mehr in Anlage mit der Mantelfläche des Kühlmittelrohres, so daß während der Relativbewegung kein Verschleiß auftritt. Beim Einsetzen des Kegel-Hohlschaftes in die Werkzeugaufnahme wird also der Dichtring über den oberen Rohrabschnitt so weit nach unten geschoben, bis er im weiteren Rohrabschnitt wieder von der Mantelfläche freikommt. Nach dem Einkuppeln wird der Dichtring dann während des Spannvorganges wieder auf den oberen Rohrabschnitt hochgezogen und sorgt dort für die entsprechende Abdichtung.

Durch diese einfache Konstruktionsänderung an dem Kühlmittelrohr ist es also möglich, die Abdichtprobleme bei der Kühlmittelversorgung der Werkzeuge zu beseitigen.

Dabei ist es bevorzugt, wenn eine Abdeckung für die Einlaßöffnung vorgesehen ist, die verhindert, daß Späne in das Kühlmittelrohr hineingelangen.

Von besonderem Vorteil ist hier, daß zwei Maßnahmen zusammengefaßt werden, durch die sowohl die Abdichtprobleme als auch die Versorgungsprobleme beseitigt werden. Ein weiterer Vorteil dieser Maßnahmen liegt darin, daß lediglich konstruktive Änderungen an dem Kühlmittelrohr erforderlich sind, so daß bestehende Werkzeugmaschinen und HSK-Werkzeughalter weiter verwendet werden bzw. nachgerüstet werden können.

Wenn der Halter zusammen mit automatischen Werkzeugwechselvorrichtungen verwendet wird, werden die Halter mit den zur Zeit nicht verwendeten Werkzeugen in einer Magazinstellung gespeichert, wo die Kegel-Hohlschäfte der einzelnen Halter abgedeckt sind, um sie vor in dem Arbeitsraum der Werkzeugmaschine herumfliegenden Spänen zu schützen. Zum Werkzeugwechsel werden die Halter aus der Magazinstellung in die Arbeitsstellung unter der Spindel überführt, wo dann der oben beschriebene Einkuppel- und Einspannvorgang erfolgt.

Während des Überführens des Halters von der Magazinstellung in die Arbeitsstellung ist der Kegel-Hohlschaft ungeschützt, so daß während dieser Zeit Späne in das Innere des Kegel-Hohlschaftes sowie in das nach oben offene Kühlmittelrohr gelangen können. Diese Späne werden dann nach dem Einspannen des Halters durch das fließende Kühlmittel zu dem Werkzeug transportiert, wo sie die feinen Kanäle verstopfen können, durch die Kühlmittel zu dem Werkzeug gelangen soll. Der Erfinder der vorliegenden Anmeldung hat jetzt erkannt, daß es nicht erforderlich ist, den gesamten Kegel-Hohlschaft auch während des Überführens zwischen der Magazinstellung und der Arbeitsstellung abzudecken bzw. zu schützen, sondern daß eine Abdeckung lediglich der Einlaßöffnung des Kühlmittelrohres ausreicht, um die Verschmutzung durch Späne zu verhindern. Hier kann also eine kostengünstige, konstruktiv einfache Abdeckung lediglich für das Kühlmittelrohr gewählt werden. In der Magazinstellung ist es erforderlich, den gesamten Kegel-Hohlschaft vor herumfliegenden Spänen und Kühl-/Bohröl zu schützen, damit an der Außenfläche des Kegel-Hohlschaftes anhaftende Späne nicht das Einspannen in die Werkzeugaufnahme negativ beeinflussen. Ein derartiger Schutz ist während der kurzen Überführungszeit von der Magazinstellung in die Arbeitsstellung nicht erforderlich, da während dieses Werkzeugwechsels keine Bearbeitung von Werkstücken stattfindet, so daß auch keine Späne im Arbeitsraum herumfliegen. Der Erfinder der vorliegenden Anmeldung hat jedoch erkannt, daß es immer wieder vorkommt, daß während des Werkzeugwechsels Späne von Teilen der Werkzeugmaschine herabfallen, die zwar nicht an dem Kegel-Hohlschaft hängenbleiben würden, jedoch eine Gefahr für die Kühlung des Werkzeuges darstellen, wenn sie in das Innere des Kühlmittelrohres gelangen.

Die Abdeckung für die Einlaßöffnung des Kühlmittelrohres kann z.B. darin bestehen, daß die obere Öffnung des Kegel-Hohlschaftes durch einen sich nach innen öffnenden Deckel abgeschlossen wird. Dieser Deckel kann z.B. automatisch verschwenkt werden, wenn die Zangensegmente des Spannsystems in das Innere des Kegel-Hohlschaftes eingeführt werden.

In einer Weiterbildung ist es dann bevorzugt, wenn die Abdeckung zunächst ein Sieb umfaßt.

Hier ist von Vorteil, daß keine schwenkbare oder sonstwie bewegbare Abdeckung erforderlich ist, sondern daß ein einfaches Sieb verwendet wird, daß permanent auf der Einlaßöffnung verbleiben kann. Diese Maßnahme ist also konstruktiv von Vorteil.

Ferner ist es bevorzugt, wenn das Kühlmittelrohr einen zentrischen Kühlmittelkanal aufweist, dessen Innendurchmesser sich im Bereich der Einlaßöffnung unter Ausbildung einer Schulter stufenartig erweitert, wobei das Sieb auf der Schulter aufliegt.

Hier ist von Vorteil, daß eine relativ geringe Konstruktionsänderung an bekannten Kühlmittelrohren erforderlich ist, um für eine Aufnahme des Siebes zu sorgen. Der Kühlmittelkanal muß lediglich von der Einlaßseite her etwas aufgebohrt werden, bevor dann das Sieb eingelegt werden kann. Durch die Verwendung eines Siebes sozusagen in oder hinter der Einlaßöffnung wird zuverlässig verhindert, daß Späne in den Kühlmittelkanal hineingelangen, von wo sie dann durch das fließende Kühlmittel in die sich verzweigenden Kühlmittelkanäle des Werkzeuges gelangen könnten. Die Maschengröße des Siebes muß dabei so klein sein, daß auch kleine Späne zuverlässig abgehalten werden. Durch die Maschigkeit des Siebes und ggf. auf dem Sieb aufliegende Späne wird zwar der gesamte Durchsatz an Kühlmittel verringert, diese Verringerung ist jedoch nicht so groß, daß die etwas zurückgehende Kühlmittelversorgung des Werkzeuges dazu führt, daß das Werkzeug sich überhitzt. Eine derartige Überhitzung findet nur dann statt, wenn Späne in die Kühlmittelkanäle eindringen und die Versorgung mit Kühlmittel ganz unterbinden.

Dabei ist es bevorzugt, wenn das Sieb durch ein Klemmelement, vorzugsweise einen Zackenring in dem erweiterten Durchmesser des Kühlmittelkanales gehalten wird.

Diese Maßnahme ist konstruktiv von Vorteil, da die Montage des Siebes sehr einfach durchzuführen ist.

Dabei ist es bevorzugt, wenn das Sieb auf einem weiteren Sieb mit größerer Maschenweite aufliegt.

Hier ist von Vorteil, daß das weitere Sieb wegen der größeren Maschenweite stabiler ist, also das feinere Sieb sozusagen stabilisiert und unterstützt, wobei es dennoch durch die gegenseitige Überdeckung nicht zu einer Reduzierung der effektiven Maschenweite kommt, so daß der Durchfluß gesichert ist.

Ferner ist es bevorzugt, wenn die Abdeckung einen Steckeinsatz umfaßt, der in einer Stufenbohrung an der Einlaßöffnung sitzt und sich auf einer Schulter abstützt, wobei der Steckeinsatz zumindest ein Sieb trägt und an dessen Rand unterstützt, wobei der Steckeinsatz vorzugsweise einen Ablaßkanal aufweist, dessen Durchmesser geringer ist als der Innendurchmesser des Kühlmittelkanals.

Hier ist von Vorteil, daß in den Steckeinsatz ein oder mehrere Siebe eingesetzt werden können, wobei die Maschenweite der Siebe zueinander unterschiedlich sein kann, so daß für ein sicheres Fernhalten von Spänen sowie eine gute Unterstützung des äußeren, feinsten Siebes gesorgt wird. Durch den Ablaßkanal wird der gesamte Durchsatz an Kühlmittel bereits verringert, so daß das oder die Siebe keinem allzu großen Kühlmitteldruck standhalten müssen, so daß sie nicht so weit verformt werden können, daß sie durch den Kühlmitteldruck aus ihrer Verankerung gerissen werden. Der Steckeinsatz selbst sorgt dabei für eine gute Unterstützung des oder der Siebe, so daß insgesamt das oder die Siebe sicher im Bereich der Einlaßöffnung gehalten werden, wodurch Späne ferngehalten und eine sichere Kühlmittelversorgung des Werkzeuges garantiert werden.

Weiterhin ist es bevorzugt, wenn zwischen dem oberen und dem weiteren Rohrabschnitt ein konischer Übergangsbereich vorgesehen ist.

Bei dieser Maßnahme ist von Vorteil, daß der Dichtring während des Spannvorganges geschont wird. Der Dichtring kann nämlich auf dem konischen Übergangsbereich hochgleiten, so daß er ohne scharfe Übergänge überqueren zu müssen auf dem oberen Rohrabschnitt zu liegen kommt.

Dabei ist es bevorzugt, wenn der Außendurchmesser des weiterern Rohrabschnittes um weniger als 10 % kleiner ist als der des oberen Rohrabschnittes.

Hier ist von Vorteil, daß bestehende Kühlmittelrohre auf einfache Weise umkonstruiert oder nachgearbeitet werden können, da die Dicke der Rohrwand ausreicht, um ein Abdrehen des Außendurchmessers im Bereich des weiteren Rohrabschnittes um 10 % zu erlauben.

Allgemein ist es bevorzugt, wenn das Kühlmittelrohr an seinem unteren Ende einen Flansch aufweist, über den es mittels einer Überwurfmutter mit Außengewinde an dem Halter festgeschraubt ist.

Diese Maßnahme ist an sich bekannt, sie weist den Vorteil auf, daß das Kühlmittelrohr ausgetauscht werden kann. Damit ist es möglich, bei bestehenden Haltern das alte Kühlmittelrohr durch ein erfindungsgemäßes Kühlmittelrohr zu ersetzen.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Fig. 1: den neuen Halter mit neuem Kühlmittelrohr in einer schematischen, teilweise geschnittenen Seitenansicht;
- Fig. 2: einen Längsschnitt durch ein erstes Ausführungsbeispiel des neuen Kühlmittelrohres aus Fig. 1;
- Fig. 3: in einer schematischen Darstellung einen ausschnittsweisen Längsschnitt durch den Bereich der Werkzeugaufnahme einer Spindel einer Werkzeugmaschine; und
- Fig. 4: in einer Darstellung wie Fig. 2 ein zweites Ausführungsbeispiel des neuen Kühlmittelrohres.

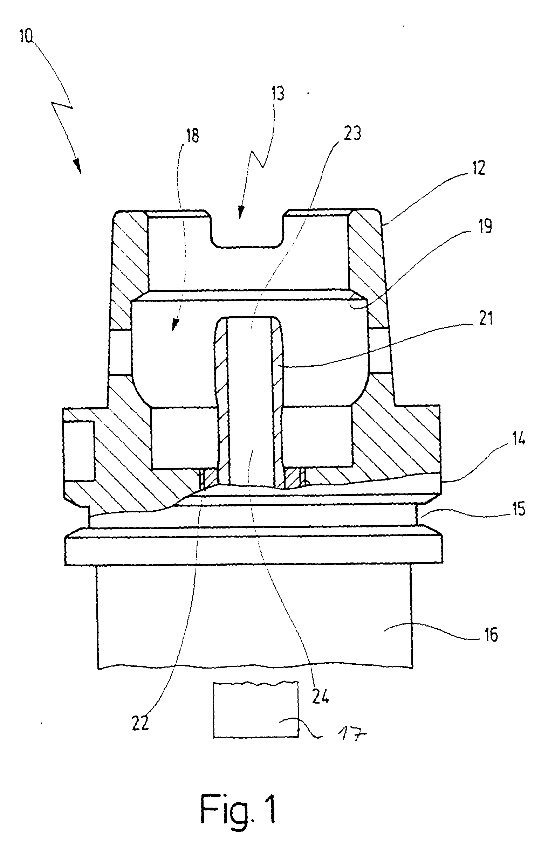

In Fig. 1 ist mit 10 ein Halter für ein nicht dargestelltes Werkzeug bezeichnet. Der Halter ist in Fig. 1 in einer schematischen, teilweise geschnittenen Seitenansicht dargestellt.

Der Halter 10 weist zunächst einen an sich bekannten Kegel-Hohlschaft 12 auf, in dem eine obere Öffnung 13 vorgesehen ist. An den Kegel-Hohlschaft 12 schließt sich nach unten ein Bund 14 an, an dem eine außen umlaufende Greifernut 15 für automatische Werkzeugwechselvorrichtungen vorgesehen ist.

Unterhalb des Bundes 14 ist ein Halteschaft 16 angedeutet, an dem wahlweise Werkzeuge 17 befestigt werden können.

Der Kegel-Hohlschaft 12 weist in seinem Inneren 18 eine umlaufende Schulter 19 auf, die mit Zangensegmenten eines Spannsystemes zusammenwirkt, über das der insoweit bekannte Halter 10 in eine Werkzeugaufnahme in einer Spindel einer Werkzeugmaschine eingesetzt werden kann.

In dem Inneren 18 des Kegel-Hohlschaftes 12 ist in an sich noch bekannter Weise ein Kühlmittelrohr 21 angeordnet, das mittels einer Überwurfmutter 22 lösbar an dem Halter 10 befestigt ist. Das Kühlmittelrohr 21 weist einen in eine Einlaßöffnung 23 mündenden Kühlmittelkanal 24 auf, über den das jeweils an dem Halteschaft 16 befestigte Werkzeug mit Kühlmittel versorgt wird, das in noch zu beschreibender Weise von der Werkzeugmaschine geliefert wird.

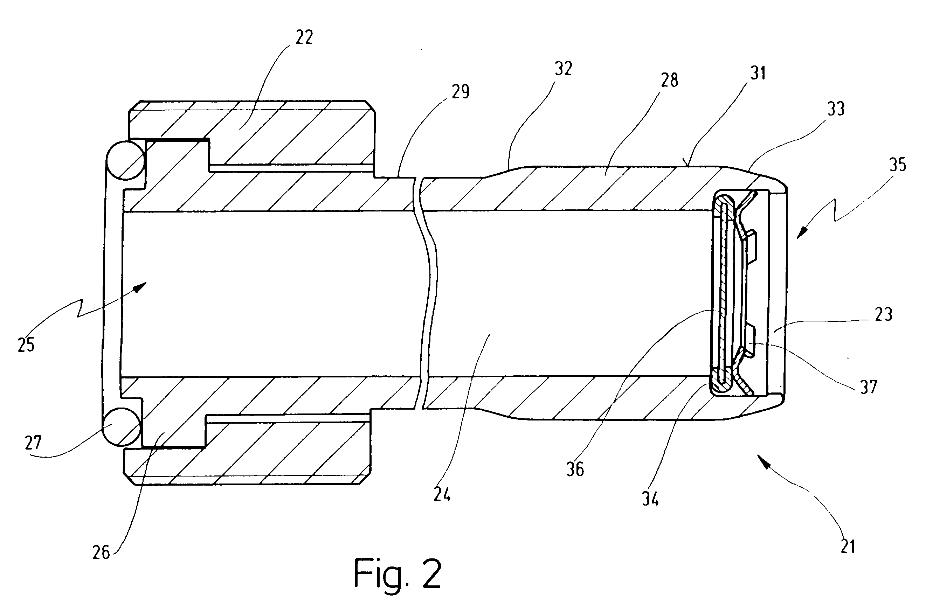

In Fig. 2 ist in einem schematischen Längsschnitt das Kühlmittelrohr 21 aus Fig. 1 näher dargestellt. Zunächst ist zu erkennen, daß das Kühlmittelrohr 21 an seinem unteren Ende 25 einen Flansch 26 aufweist, mit dem die Überwurfmutter 22 in Eingriff ist, die ein Außengewinde zum Einschrauben in den Halter 10 aufweist. Ferner ist noch ein Dichtring 27 gezeigt, der für einen dichtenden Sitz des Kühlmittelrohres 21 in dem Halter 10 sorgt.

Das Kühlmittelrohr 21 weist an seinem oberen Ende einen oberen Rohrabschnitt 28 auf, an den sich von der Einlaßöffnung 23 abgelegen ein weiterer Rohrabschnitt 29 anschließt, dessen Außendurchmesser geringer ist als der Außendurchmesser des oberen Rohrabschnittes 28, dessen zylindrische Mantelfläche 31 unter Ausbildung eines konischen Übergangsbereiches 32 in den weiteren Rohrabschnitt 29 führt. Der Außendurchmesser an dem oberen Rohrabschnitt 28 beträgt z.B. 12 mm, während der Außendurchmesser an dem weiteren Rohrabschnitt 29 bei 11 mm liegt, also geringfügig weniger als 10 % kleiner ist als der Außendurchmesser des oberen Rohrabschnittes 28.

Von dem konischen Übergangsbereich 32 abgelegen weist der obere Rohrabschnitt 28 noch eine konische Spitze 33 auf, die sich zu der Einlaßöffnung 23 hin verjüngt.

Der Kühlmittelkanal 24 erweitert sich im Bereich der konischen Spitze 33 unter Ausbildung einer Schulter 34 stufenartig, so daß die Einlaßöffnung 23 einen größeren Innendurchmesser aufweist als der restliche Kühlmittelkanal 24.

Um das Eindringen von Spänen in den Kühlmittelkanal 24 zu verhindern, ist im Bereich der Einlaßöffnung 23 eine Abdeckung 35 vorgesehen. Die Abdeckung 35 umfaßt ein Sieb 36, das auf der Schulter 34 aufliegt, sowie einen Zackenring 37, der als Klemmelement das Sieb 36 in dem Bereich des erweiterten Innendurchmessers hält.

Zurückkehrend zu Fig. 1 ist zu erkennen, daß das Kühlmittelrohr 21 mit seiner Einlaßöffnung 23 in Richtung der oberen Öffnung 13 des Kegel-Hohlschaftes 12 weist. Hier ist weiter zu bemerken, daß der Halter 10 im Zusammenhang mit automatischen Werkzeugwechselvorrichtungen verwendet wird, die der Reihe nach Halter 10 zwischen einer Magazinstellung und einer Arbeitsstellung an der Spindel einer Werkzeugmaschine überführen. In der Magazinstellung befinden sich die Halter in köcherartigen Abdeckungen, so daß keine Späne auf den Kegel-Hohlschaft 12 bzw. in das Innere 18 des Kegel-Hohlschaftes 12 gelangen können. Während der Überführung der Halter 10 von der Magazinstellung in die Arbeitsstellung ist die obere Öffnung 13 jedoch ungeschützt, so daß von Teilen der Werkzeugmaschine herabfallende Späne auch in die Einlaßöffnung 23 gelangen können. Durch die Abdeckung 35 wird jetzt verhindert, daß derartige Späne in den Kühlmittelkanal 24 gelangen und schließlich die feineren Kühlmittelkanäle in dem nicht gezeigten Werkzeug so weit verstopfen, daß keine Kühlung des Werkzeuges mehr erfolgt.

Zu diesem Zweck muß das Sieb 36 eine entsprechend kleine Maschengröße aufweisen, so daß auch kleinere Späne nicht in den Kühlmittelkanal 24 gelangen können. Diese Späne bleiben also im Bereich der Einlaßöffnung 23 auf dem Zackenring 37 bzw. dem Sieb 36 liegen, wo sie ggf. zu einer Verringerung des Kühlmitteldurchsatzes führen. Diese Verringerung des Kühlmitteldurchsatzes ist nach Erfahrung der Erfinder der vorliegenden Anmeldung jedoch so gering, daß die Kühlung des Werkzeuges nicht negativ beeinflußt wird.

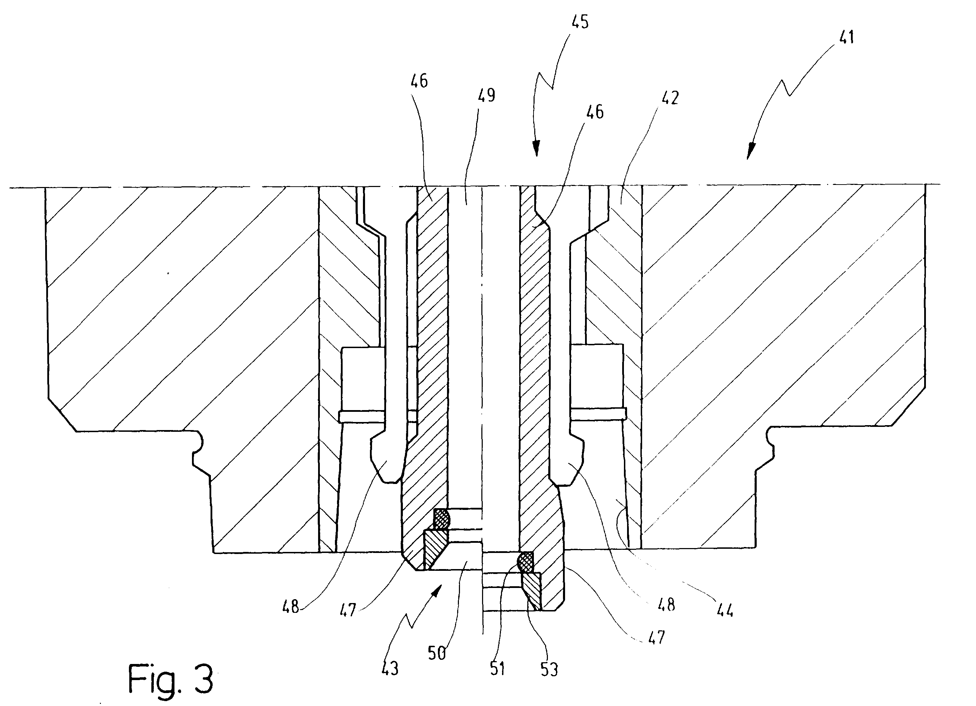

In Fig. 3 ist jetzt ausschnittsweise und sehr schematisch ein Teil einer Werkzeugmaschine 41 im Bereich ihrer Spindel 42 gezeigt. Die Spindel 41 weist eine Werkzeugaufnahme 43 auf, die eine konische Öffnung 44 umfaßt, deren Form komplementär zu der des Kegel-Hohlschaftes 12 ausgebildet ist. In Fig. 3 ist aus Gründen der Übersichtlichkeit auf die Darstellung des Kegel-Hohlschaftes verzichtet worden.

In der Spindel 42 ist ein Spannsystem 45 angeordnet, das in an sich bekannter Weise eine Zugstange 46 mit konischem Zugkegel 47 sowie Zangensegmente 48 umfaßt. In der rechten Hälfte der Fig. 3 ist das Spannsystem 45 in gelöstem Zustand und in der linken Hälfte in gespanntem Zustand gezeigt, in dem die Zugstange 46 sowie der Zugkegel 47 eingezogen sind, so daß das Zangensegment 48 nach außen gedrückt ist, wo es mit der Schulter 19 im Inneren 18 des Kegel-Hohlschaftes 12 (siehe Fig. 1) in Anlage gelangt.

In der Zugstange 46 sowie in dem Zugkegel 47 ist eine zentrische Bohrung 49 vorgesehen, über die Kühlmittel zu dem Kühlmittelrohr 21 in dem Halter 10 geführt wird. Die zentrische Bohrung 49 erweitert sich an ihrem unteren Ende 50 stufenartig und trägt dort einen Dichtring 51, der über einen Messingeinsatz 53 verschraubt ist.

Beim Einführen des Kegel-Hohlschaftes 12 in die Werkzeugaufnahme 43 gleitet der Dichtring 51, der vorzugsweise ein O-Ring ist, zunächst über die konische Spitze 33 auf die Mantelfläche 31 des oberen Rohrabschnittes 28. Beim weiteren Einschieben des Kegel-Hohlschaftes 12 in die Werkzeugaufnahme 43 wird der Dichtring 51 wieder von dem oberen Rohrabschnitt 28 heruntergeschoben und befindet sich nun zunächst im Bereich des weiteren Rohrabschnittes 29, wo er nicht in Anlage mit der Mantelfläche 31 ist.

In diesem Zustand des Einkuppelns/Einspannens des Halters 10 in die Werkzeugaufnahme 43 befindet sich das Spannsystem 45 in der in der rechten Hälfte von Fig. 3 gezeigten Stellung.

Die Spindel 42 führt jetzt eine Relativbewegung zu dem Halter 10 durch, der von der Werkzeugwechselvorrichtung drehbar gehalten wird. Zwischen der Spindel 42 und dem Halter 10 sind in den Zeichnungen aus Gründen der Übersichtlichkeit nicht dargestellte und an sich bekannte Nutensteine und Vertiefungen vorgesehen, die nur in einer bestimmten radialen Ausrichtung zwischen Spindel 42 und Halter 10 miteinander verrasten. Sobald dieses Verrasten erfolgt ist, der Halter 10 also in die Spindel 42 eingekuppelt wurde, wird das Spannsystem 45 angezogen. Dazu wird die Zugstange 46 zurückgezogen, so daß der Zugkegel 47 die Zangenelemente 48 nach außen drückt, wodurch der Kegel-Hohlschaft 12 noch geringfügig weiter in die konische Öffnung 44 hineingezogen und schließlich drehfest verspannt wird.

Während dieses Spannvorganges führt die Zugstange 46 einen größeren Hub durch, der dazu führt, daß der Dichtring 51 über den konischen Übergangsbereich 32 wieder auf die Mantelfläche 31 heraufgezogen wird, wo er für eine dichte Abdichtung sorgt, so daß durch die zentrische Bohrung 49 zugeführtes Kühlmittel nicht außen an dem Kühlmittelrohr 21 vorbeilaufen kann.

Der Dichtring 51 gleitet also im wesentlichen in axialer Richtung auf der Mantelfläche 31, wobei das Aufschieben des Dichtringes 51 durch die konische Spitze 33 sowie den konischen Übergangsbereich 32 erleichtert wird. Während des Einkuppelvorganges, also während der radialen Relativbewegung zwischen dem Halter 10 und der Spindel 42 liegt der Dichtring 51 nicht auf der Mantelfläche 31 auf, so daß hier kein Verschleiß stattfindet. Lediglich während des Spannvorganges findet ein Reibvorgang in axialer Richtung statt, der hierbei auftretende Verschleiß ist jedoch relativ gering, so daß die Lebensdauer des Dichtringes 51 und damit der gesamten Abdichtung der Kühlmittelversorgung deutlich größer ist als beim Stand der Technik, wo der weitere Rohrabschnitt 29 den selben Durchmesser aufweist, wie der obere Rohrabschnitt 28.

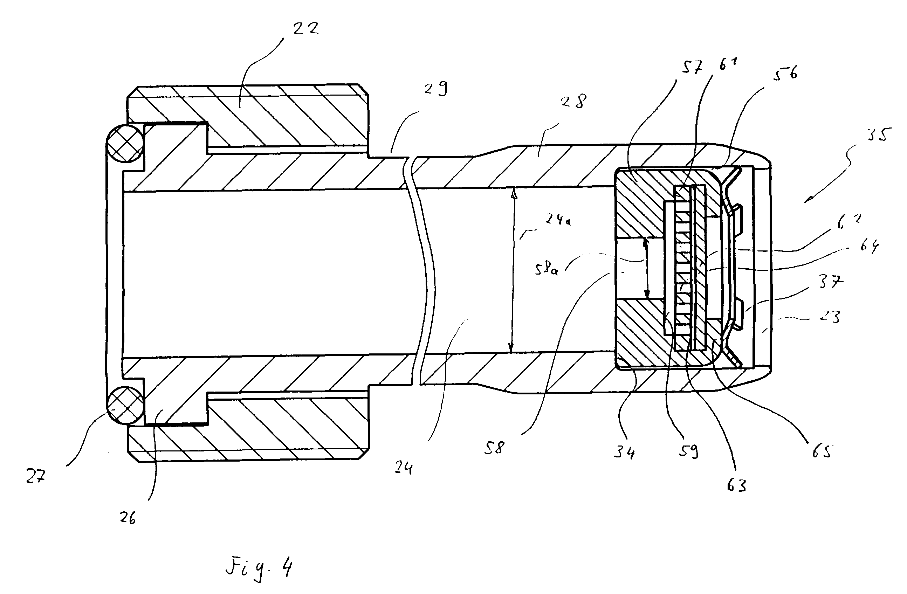

In Fig. 4 ist in einer Darstellung wie Fig. 2 ein weiteres Ausführungsbeispiel des neuen Kühlmittelrohres 21 gezeigt. Das Kühlmittelrohr 21 weist im Bereich der Einlaßöffnung 23 jetzt eine tiefere Stufenbohrung 56 auf, in der ein zylindrischer Steckeinsatz 57 steckt, der durch den schon aus Fig. 2 bekannten Zackenring 37 gehalten wird.

Der Steckeinsatz 57 weist einen Ablaßkanal 58 auf, dessen Innendurchmesser 58a deutlich geringer ist als der bei 24a angedeutete Innendurchmesser des Kühlmittelkanals 24. An den Ablaßkanal 58 schließt sich unter Ausbildung von zwei Schultern 59, 61 eine weitere Stufenbohrung an, wobei auf der zweiten Schulter 51 mehrere Siebe 62, 63, 64 liegen, die durch einen umgebördelten Rand 65 des Steckeinsatzes 57 auf die Schulter 61 gedrückt werden.

Die Maschenweite der Siebe 62, 63 und 64 ist unterschiedlich, wobei das äußerste Sieb 62 die geringste und das innere Sieb 64 die größte Maschenweite aufweist. Die gröberen Siebe 63, 64 bilden sozusagen eine Unterstützung für das feine Sieb 62, wobei die effektive Maschenweite etwa der des Siebes 62 entspricht, da die Siebe 63, 64 deutlich größere Maschen aufweisen.

Durch die Unterstützung an der Schulter 61 sowie den durch den Ablaßkanal 58 reduzierten Kühlmitteldruck müssen die insgesamt drei Siebe 62, 63, 64 einen geringeren Druck aushalten als das Sieb 36 gemäß Fig. 2. Weil hier mehrere Siebe untereinander angeordnet sind, wird außerdem ein Durchbiegen der Siebe 62, 63, 64 verhindert, wofür insbesondere das sehr starre Sieb 64 sorgt. Sollten die Siebe 62, 63, 64 dennoch in Fig. 4 nach links durchbiegen, so gelangen sie in Anlage mit der Schulter 59, die ein weiteres Durchbiegen sowie Abrutschen von der Schulter 61 verhindert. Damit ist es bei dem Ausführungsbeispiel gemäß Fig. 4 nicht möglich, daß Siebe 62, 63 oder 64 durch zu hohen Kühlmitteldruck in den Kühlmittelkanal 24 hinein gelangen, was bei starker Verstopfung des Siebes 36 gemäß Fig. 2 durchaus möglich ist.

Es sei noch einmal besonders darauf hingewiesen, daß durch den verringerten Außendurchmesser des Kühlmittelrohres 21 im Bereich des weiteren Rohrabschnittes 29 der Verschleiß des Dichtringes 51 deutlich verringert wird, so daß wegen der verbesserten Abdichtung des Kühlmittelkreises die Betriebssicherheit von Werkzeugmaschinen erhöht wird, die mit dem neuen Halter 10, der das neue Kühlmittelrohr 21 aufweist, bestückt sind.

Eine weitere Erhöhung der Betriebssicherheit wird durch die Abdeckung 35 erzielt, die verhindert, daß die Kühlmittelversorgung des Werkzeuges unterbrochen wird, wie dies oben bereits ausführlich beschrieben wurde.

## Patentansprüche

1. Kühlmittelrohr für einen Halter (10) für ein Werkzeug (17), wobei der Halter (10) einen eine obere Öffnung (13) aufweisenden Kegel-Hohlschaft (12) zum Einspannen in eine Werkzeugaufnahme (43) umfaßt und im Inneren (18) des Kegel-Hohlschaftes (12) das Kühlmittelrohr (21) zur Zufuhr von Kühlmittel zu dem Werkzeug (17) angeordnet wird, wobei das Kühlmittelrohr (21) eine der oberen Öffnung (13) zugewandte Einlaßöffnung (23) für Kühlmittel sowie einen oberen Rohrabschnitt (28) mit einer zylindrischen, äußeren Mantelfläche (31) aufweist, mit der bei in die Werkzeugaufnahme (43) eingespanntem Halter (10) ein Dichtring (51) in Anlage ist, der in einem das Kühlmittelrohr (21) dann zumindest teilweise übergreifenden Zufuhrrohr (46) für Kühlmittel angeordnet ist,
dadurch gekennzeichnet, daß sich von der Einlaßöffnung (23) abgelegen an den oberen Rohrabschnitt (28) nach unten ein weiterer Rohrabschnitt (29) anschließt, dessen Außendurchmesser geringer ist als der des oberen Rohrabschnittes (28), wobei sich beim Einkuppeln des Halters (10) der Dichtring (51) im Bereich des weiteren Rohrabschnittes (29) befindet und erst durch das Einspannen in dichtende Anlage mit der Mantelfläche (31) des oberen Rohrabschnittes (28) gelangt.

2. Kühlmittelrohr nach Anspruch 1, dadurch gekennzeichnet, daß eine Abdeckung (35) für die Einlaßöffnung (23) vorgesehen ist, die verhindert, daß Späne in das Kühlmittelrohr (21) hineingelangen.

3. Kühlmittelrohr nach Anspruch 2, dadurch gekennzeichnet, daß die Abdeckung (35) zumindest ein Sieb (36; 62, 63, 64) umfaßt.

4. Kühlmittelrohr nach Anspruch 3, dadurch gekennzeichnet, daß das Kühlmittelrohr (21) einen zentrischen Kühlmittelkanal (24) aufweist, dessen Innendurchmesser sich im Bereich der Einlaßöffnung (23) unter Ausbildung einer Schulter (34) stufenartig erweitert, wobei das Sieb (36) auf der Schulter (34) aufliegt.

5. Kühlmittelrohr nach Anspruch 4, dadurch gekennzeichnet, daß das Sieb (36) durch ein Klemmelement, vorzugsweise einen Zackenring (37) in dem erweiterten Durchmesser des Kühlmittelkanales (24) gehalten wird.

6. Kühlmittelrohr nach einem der Ansprüche 1 bis 5, dadurch gekennzeichnet, daß zwischen dem oberen und dem weiteren Rohrabschnitt (28, 29) ein konischer Übergangsbereich (32) vorgesehen ist.

7. Kühlmittelrohr nach einem der Ansprüche 1 bis 6, dadurch gekennzeichnet, daß der Außendurchmesser des weiteren Rohrabschnittes (29) um weniger als 10 % kleiner ist als der des oberen Rohrabschnittes (28).

8. Kühlmittelrohr nach einem der Ansprüche 1 bis 7, dadurch gekennzeichnet, daß das Kühlmittelrohr (21) an seinem unteren Ende einen Flansch (26) aufweist, über den es mittels einer Überwurfmutter (22) mit Außengewinde an dem Halter (10) festgeschraubt ist.

9. Kühlmittelrohr nach einem der Ansprüche 3 bis 8, dadurch gekennzeichnet, daß das Sieb (62) auf einem weiteren Sieb (63, 64) mit größerer Maschenweite aufliegt.

10. Kühlmittelrohr nach einem der Ansprüche 2 bis 9, dadurch gekennzeichnet, daß die Abdeckung (35) einen Steckeinsatz (57) umfaßt, der in einer Stufenbohrung (56) an der Einlaßöffnung (23) sitzt und sich auf einer Schulter (34) abstützt, wobei der Steckeinsatz (57) zumindest ein Sieb (62, 63, 64) trägt und an dessen Rand unterstützt.

11. Kühlmittelrohr nach Anspruch 10, dadurch gekennzeichnet, daß der Steckeinsatz (57) einen Ablaßkanal (58) aufweist, dessen Innendurchmesser (58a) geringer ist als der Innendurchmesser (24a) des Kühlmittelkanals (24).

12. Halter für ein Werkzeug (17), mit einem eine obere Öffnung (13) aufweisenden Kegel-Hohlschaft (12) zum Einspannen in eine Werkzeugaufnahme (43) und einem im Inneren (18) des Kegel-Hohlschaftes (12) angeordneten Kühlmittelrohr (21) zur Zufuhr von Kühlmittel zu dem Werkzeug (17),
dadurch gekennzeichnet, daß das Kühlmittelrohr (21) in einem der Ansprüche 1 bis 11 ist.

## Claims

1. Coolant tube for a holder (10) for a tool (17), the holder (10) comprising a tapered hollow shaft (12), having an upper opening (13), for clamping into a tool receptacle (43), the coolant tube being arranged in an interior (18) of the tapered hollow shaft (12) for delivery of coolant to the tool (17), whereby the coolant tube (21) comprises an inlet opening (23) for coolant, facing the upper opening (13), as well as an upper tube section (28) having a cylindrical outer surface area (31), a sealing ring (51) being in contact with the surface area when the holder (10) is clamped into the tool receptacle (43), the sealing ring being arranged in a delivery tube (46) for coolant, the delivery tube (46) at least partly overlapping the coolant tube (21) when the holder is clamped into the tool receptacle,
characterized in that a further tube section (29) adjoins the upper tube section (28) at the bottom thereof remote from the inlet opening (23), the further tube section having an outside diameter smaller than that of the upper tube section (28), whereby upon coupling of the holder (10) the sealing ring (51) is in the region of the further tube section (29) and gets into sealing contact with the surface area (31) of the upper tube section (28) only upon clamping.

2. The coolant tube of claim 1, characterized in that a cover (35) is provided for the inlet opening (23) that prevents chips from getting into the coolant tube (21).

3. The coolant tube of claim 2, characterized in that the cover (35) comprises at least one sieve (36; 62, 63, 64).

4. The coolant tube of claim 3, characterized in that the coolant tube (21) comprises a centered cooling conduit (21), the inside diameter whereof is enlarged in stepped fashion in the region of the inlet opening (23) to form a shoulder (34), such that the sieve (36) rests on the shoulder (34).

5. The coolant tube of claim 4, characterized in that the sieve (36) is retained by a clamping element, preferably a toothed ring (37) in the enlarged diameter of the coolant conduit (24).

6. The coolant tube of any of claims 1 - 5, characterized in that a conical transition region (32) is provided between the upper and the further tube section (28, 29).

7. The coolant tube of any of claims 1 - 6, characterized in that the outside diameter of the further tube section (29) is less than 10 % smaller than that of the upper tube section (28).

8. The coolant tube of any of claims 1 - 7, characterized in that the coolant tube (21) has at its lower end a flange (26) by means of which it is screwed onto the holder (10) by means of a coupling nut (22) with external threads.

9. The coolant tube of any of claims 3 - 8, characterized in that the sieve (62) rests on a further sieve (63, 64) having a greater mesh size.

10. The coolant tube of any of claims 2 - 9, characterized in that the cover (35) comprises a plug insert (57) that sits in a stepped hole (56) on the inlet opening (32) and is braced against a shoulder (34), the plug insert (57) carrying at least one sieve (62, 63, 64) and supports the sieve on its rim.

11. The coolant tube of claim 10, characterized in that the plug insert (57) has an outlet conduit (58) the inner diameter (58a) whereof is smaller than the inner diameter (24a) of the coolant conduit (24).

12. Holder for a tool (17), comprising a tapered hollow shaft (12), having an upper opening (13), for clamping into a tool receptacle (43), and a coolant tube (21) arranged in an interior (18) of the tapered hollow shaft (12) for delivery of coolant to the tool (17),
characterized in that the coolant tube (21) is in any of claims 1 - 11.

## Revendications

1. Tube pour produit réfrigérant destiné à un porte-outil (10) pour un outil (17), le porte-outil (10) comprenant une tige creuse conique (12), présentant une ouverture supérieure (13), destinée à être encastrée dans un logement d'outil (43), et le tube pour produit réfrigérant (21) étant monté à l'intérieur (18) de la tige creuse conique (12), afin d'acheminer du produit réfrigérant vers l'outil (17), le tube pour produit réfrigérant (21) présentant une ouverture d'admission (23) destinée au produit réfrigérant, orientée vers l'ouverture supérieure (13), ainsi qu'un tronçon de tube supérieur (28) avec une surface latérale extérieure (31) cylindrique grâce à laquelle, lorsque le porte-outil (10) est encastré dans le logement d'outil (43), une bague d'étanchéité (51) est en appui, bague qui est montée dans un tube d'amenée (46), destiné au produit réfrigérant, qui coiffe alors au moins partiellement le tube pour produit réfrigérant (21),
caractérisé en ce qu'à distance de l'ouverture d'admission (23) un tronçon de tube (29) supplémentaire fait suite, en direction du bas, au tronçon de tube (28) supérieur, tronçon supplémentaire dont le diamètre extérieur est inférieur à celui du tronçon de tube (28) supérieur, la bague d'étanchéité (51), lors de l'accouplement du porte-outil (10), se trouvant dans la zone du tronçon de tube (29) supplémentaire et ne s'appuyant de façon étanche sur la surface latérale (31) du tronçon de tube (28) supérieur que lors de l'encastrement.

2. Tube pour produit réfrigérant selon la revendication 1, caractérisé en ce qu'est prévu un couvercle (35) pour l'ouverture d'admission (23), qui empêche que des copeaux ne s'introduisent dans le tube pour produit réfrigérant (21).

3. Tube pour produit réfrigérant selon la revendication 2, caractérisé en ce que le couvercle (35) comprend au moins un tamis (36 ; 62, 63, 64).

4. Tube pour produit réfrigérant selon la revendication 3, caractérisé en ce que le tube pour produit réfrigérant (21) présente un canal central pour produit réfrigérant (24), dont le diamètre intérieur, dans la zone de l'ouverture d'admission (23), s'élargit par paliers en formant un épaulement (34), le tamis (36) reposant sur l'épaulement (34).

5. Tube pour produit réfrigérant selon la revendication 4, caractérisé en ce que le tamis (36) est maintenu par un élément de blocage, de préférence une bague à dentelures (37), dans le diamètre élargi du canal à produit réfrigérant (24).

6. Tube pour produit réfrigérant selon l'une des revendications 1 à 5, caractérisé en qu'entre les tronçons de tube (28, 29) supérieur et supplémentaire est prévue une zone de transition conique (32).

7. Tube pour produit réfrigérant selon l'une des revendications 1 à 6, caractérisé en ce que le diamètre extérieur du tronçon de tube (29) supplémentaire est inférieur de moins de 10 % à celui du tronçon de tube (28) supérieur.

8. Tube pour produit réfrigérant selon l'une des revendications 1 à 7, caractérisé en ce que le tube pour produit réfrigérant (21) présente, à son extrémité inférieure, une bride (26) au moyen de laquelle il est vissé sur le porte-outil (10), par l'intermédiaire d'un écrou d'accouplement (22) présentant un filet extérieur.

9. Tube pour produit réfrigérant selon l'une des revendications 3 à 8, caractérisé en ce que le tamis (62) repose sur un autre tamis (63, 64) présentant une ouverture de crible supérieure.

10. Tube pour produit réfrigérant selon l'une des revendications 2 à 9, caractérisé en ce que le couvercle (35) comprend un insert enfichable (57) qui repose dans un perçage étagé (56) présent au niveau de l'ouverture d'admission (23) et s'appuie sur un épaulement (34), l'insert étagé (57) portant au moins un tamis (62, 63, 64) et s'appuyant sur son bord.

11. Tube pour produit réfrigérant selon la revendication 10, caractérisé en ce que l'insert enfichable (57) présente un canal d'évacuation (58) dont le diamètre intérieur (58a) est inférieur au diamètre intérieur (24a) du canal pour produit réfrigérant (24).

12. Porte-outil destiné à un outil (17) comprenant une tige creuse conique (12), présentant une ouverture supérieure (13), destinée à être encastrée dans un logement d'outil (43), et un tube pour produit réfrigérant (21) monté à l'intérieur (18) de la tige creuse conique (12), afin d'acheminer du produit réfrigérant vers l'outil (17), caractérisé en ce que le tube pour produit réfrigérant (21) est décrit dans l'une des revendications 1 à 11.
